Europäisches Patentamt

European Patent Office

Office européen des brevets

(11) Publication number: **0 343 638**
**A1**

## (12) EUROPEAN PATENT APPLICATION

(21) Application number: 89109399.9

(22) Date of filing: 24.05.89

(51) Int. Cl.⁴: **G01F 11/26 , B67D 3/00**

(30) Priority: 25.05.88 IL 86495

(43) Date of publication of application:
29.11.89 Bulletin 89/48

(84) Designated Contracting States:
**BE DE ES FR GB GR IT NL**

(71) Applicant: **Groff, Ofer**
**44 Rehov Ben Zvi**
**Hadera Haseyira(IL)**

(72) Inventor: **Groff, Ofer**
**44 Rehov Ben Zvi**
**Hadera Haseyira(IL)**

(74) Representative: **Vossius & Partner**
**Siebertstrasse 4 P.O. Box 86 07 67**
**D-8000 München 86(DE)**

(54) **Dispenser for measured quantities.**

(57) The dispenser is used to dispense a measured quantity of a liquid such as chemicals, detergents, beverages, medications etc.

The dispenser (1) has a cylindrical side wall (2), and top wall (3) and bottom wall (4). Within dispenser (1) there is provided a cylindrical pipe (5) the lower screw threaded and (6) of which is connected to bottom wall (4), while the uppermost end thereof is connected to top wall (3) and is provided with an opening (7). At a predetermined point an aperture (17) is provided. Within dispenser (1) there is further provided an excentric partition (8) which divides the inner space of dispenser (1) into two chambers (11) and (12) leaving a passage (13) between said two chambers. Side wall (2) is provided with a vent (14). Top wall (3) is provided with outlet aperture (15).

FIG 1

## DISPENSER FOR MEASURED QUANTITIES

The present invention relates to a dispenser and more particularly to a predetermined measured quantity dispenser.

There are known a great number of dispensers for dispensing all kinds of products and materials. The present invention relates to a dispenser for liquids, however, without limiting its scope it could be adapted to dispense sugar, salt, flour, etc.

In many fields it is required to dispense a measured quantity of a liquid such as chemicals, detergents, beverages, medications etc.

Bar tenders, laboratory technicians, cooks and the like measure quantities by means of a graduated measuring vessel in order to measure quantities. Some bars equip each bottle with a device which measures a predetermined quantity of said drink. In order to dose medications in most cases a spoon is used.

These methods or techniques have some drawbacks. In the first place the measured liquid is poured into an intermediate container or means which require either a number of such measuring vessels or if a combined one is used such vessel must be cleaned after every use to avoid the mixing of liquids. Secondly the measuring is performed manually, namely, transferring the measured material from its container to the measuring means and then to the place where it is required, which operations do not exclude the likelihood of some material being spilled.

It is thus the object of the present invention to provide a device which will overcome the aforesaid disadvantages.

It s a further object of the present invention to provide an automatic dispensing measuring device.

It is yet another object of the present invention to provide a dispenser which could be attached to the material's container thus conveniently be used with one hand.

According to the invention there is provided a dispenser for predetermined measured quantities which comprises a container of preferably cylindrical shape which has a top and bottom walls the bottom wall being adapted to be connected to a container holding the material to be dispensed, said dispensing container being divided into first and second chambers by a partition means, said first chamber being in communication with said material container, while said second chamber is in communication with the atmosphere, both said first and second chambers being interconnected by a passage in said dividing partition, the top wall being provided with a pouring out aperture.

The invention will now be described with reference to the annexed drawings in which:

Fig. 1 is a perspective illustration of the dispenser according to the invention.

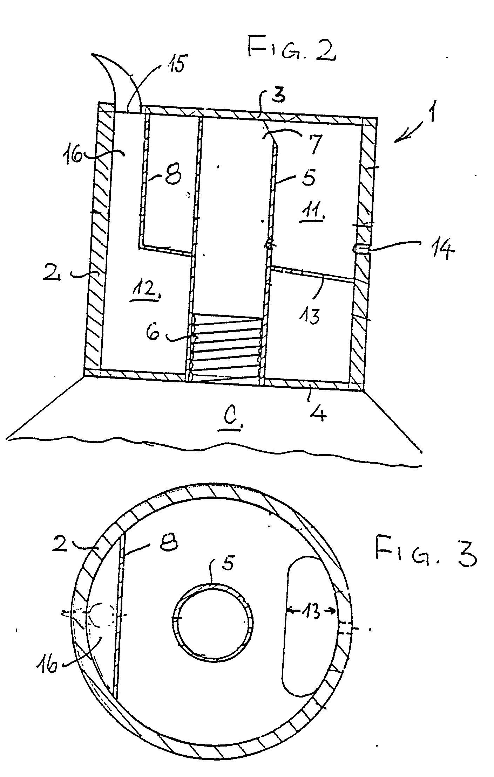

Fig. 2 is a cross section thereof, while

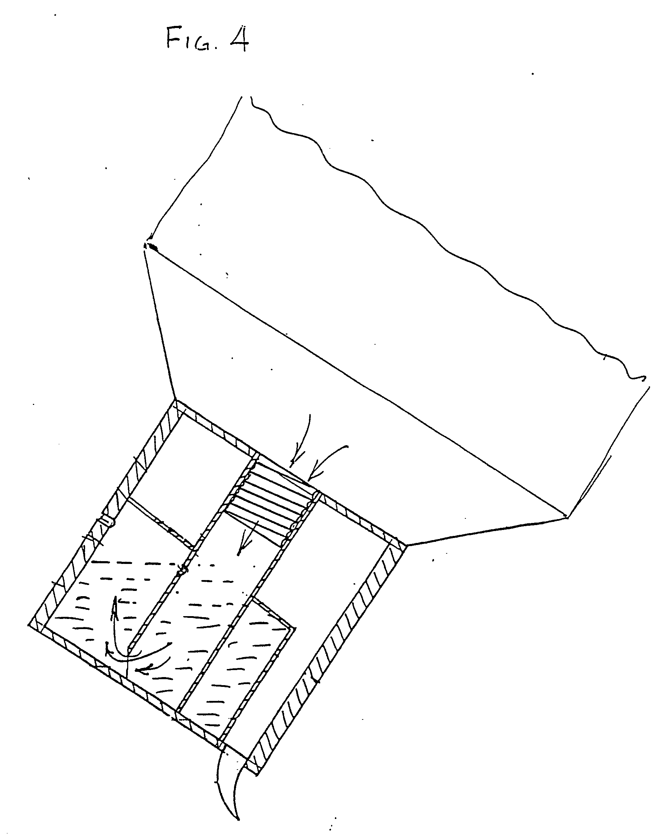

Fig. 3 is a section along lines II-II of Fig. 2.

Fig. 4 illustrates the use of the dispenser.

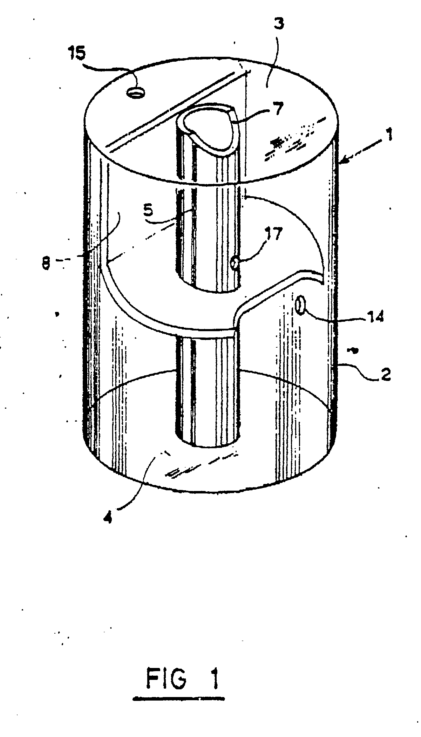

Turning first to Fig. 1, the dispenser 1 has a cylindrical side wall 2, top wall 3 and bottom wall 4. Within container 1 there is provided a cylindrical pipe 5 the lower screw threaded end 6 of which is connected to bottom wall 4, while the uppermost end thereof is connected to top wall 3 and is provided with an opening 7. At a predetermined point an aperture 16 is provided. Within container 1 there is further provided an excentric partition 8 which divides the inner space of container 1 into two chambers 11 and 12 leaving a passage 13 between said two chambers. Side wall 2 is provided with a vent 14. Top wall 3 is provided with outlet aperture 15.

The dispenser functions in the following manner. A container C of liquid material is screw threaded and connected to the dispenser. Tilting or turning the liquid container upside down (Fig. 4) will cause the liquid therein to pass via pipe 5 through passage 7 into chamber 11 until the liquid reaches aperture 17 which prevents air to enter into the liquid container from vent 14, thus no liquid is poured out. It is clear that the position of aperture 17 dictates the desired measured quantity. By turning the container to its initial position the liquid within the dispenser will pass to chamber 12. When the container is now tilted the liquid within chamber 12 poured out via passage 16 and outlet aperture 15, simultaneously with the above operation chamber 11 will be filled again as described above.

As can be seen the dispenser is automatic, namely, the tilting and turning of the container causes on the one hand to pour liquid from the container into chamber 11 while at the same time the quantity which is in chamber 12 is poured out.

## Claims

1. A dispenser for predetermined measured quantities which comprises a container of preferably cylindrical shape which has a top and bottom walls the bottom wall being adapted to be connected to a container holding the material to be dispensed, said dispensing container being divided into first and second chambers by a partition means, said first chamber being in communication with said material container, while said second chamber is in communication with the atmosphere, both said first and second chambers being interconnected by a passage in said dividing partition.

2. A dispenser as claimed in claim 1, characterised thereby that in the inner space of said dispenser is provided a pipe.

3. A dispenser as claimed in claim 1 or 2, characterised thereby that said pipe is provided with an aperture substantially in the middle thereof.

FIG 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 133 224 (BOES)<br>* Page 12, line 11 - page 15, line 11; figures 1,2 * | 1,2 | G 01 F 11/26<br>B 67 D 3/00 |
| Y | | 3 | |
| Y | FR-A-2 590 555 (ORSSAUD)<br>* Page 4, lines 10-23; figures 1-4 * | 3 | |
| A | BE-A- 656 641 (STUBBE) | | |

TECHNICAL FIELDS
SEARCHED (Int. Cl.4)

G 01 F
B 67 D
B 67 C

The present search report has been drawn up for all claims

| Place of search | Date of completion of the search | Examiner |
|---|---|---|
| THE HAGUE | 10-08-1989 | VAN DEN BOSSCHE E.J.N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)